(19) Europäisches Patentamt
European Patent Office
Office européen des brevets

(11) **EP 1 189 910 B1**

(12) **EUROPEAN PATENT SPECIFICATION**

(45) Date of publication and mention
of the grant of the patent:
**27.08.2003  Bulletin 2003/35**

(21) Application number: **00936498.5**

(22) Date of filing: **07.06.2000**

(51) Int Cl.⁷: **C07F 7/18**

(86) International application number:
**PCT/US00/15622**

(87) International publication number:
**WO 00/075148 (14.12.2000 Gazette 2000/50)**

(54) **PROCESS FOR MANUFACTURING ACRYLAMIDOALKYLALKOXYSILANES**

VERFAHREN ZUR HERSTELLUNG VON ACRYLAMIDOALKYLALKOXYSILANEN

PROCEDE DE FABRICATION D'ACRYLAMIDOALKYLALCOXYSILANES

(84) Designated Contracting States:
**AT BE CH CY DE DK ES FI FR GB GR IE IT LI LU MC NL PT SE**

(30) Priority: **07.06.1999  US 327062**
**14.06.1999  US 333191**

(43) Date of publication of application:
**27.03.2002  Bulletin 2002/13**

(73) Proprietor: **Crompton Corporation**
**Middlebury, Connecticut 06749 (US)**

(72) Inventors:
• **PEPE, Enrico, J.**
**Winterhaven, FL 33881 (US)**
• **MCMULLEN, Anne Kathryn**
**Evans, Georgia 30809 (US)**
• **TURNER, Scot M.**
**Newport, OH 45768 (US)**
• **WELLER, Keith, J.**
**Yonkers, NY 10703 (US)**

(74) Representative: **Spott, Gottfried, Dr.**
**Spott & Weinmiller**
**Patentanwälte**
**Sendlinger-Tor-Platz 11**
**80336 München (DE)**

(56) References cited:
**US-A- 3 900 679          US-A- 4 209 455**
**US-A- 4 548 842**

**Description**

Field of the Invention

This invention relates to an improved process for the production of acrylamidoalkylalkoxysilanes which find use as coupling agents.

Background of the Invention

Certain methacrylate-functional silanes have been known, including, for example, 3-methacryloxypropyltrimethoxysilane, which has uses in glass fiber-reinforced composites of various thermoplastics and in durable coatings for metallic substrates. There has been a continuing need for products with differentiated and improved performance in areas in which 3-methacryloxypropyltrimethoxysilane is used, whereby differences in molecular structure result in useful differences in silane performance in properties as diverse as rate of hydrolysis, aqueous solubility, low product color, processability of the substrate being treated from aspects of lubricity, static control, fiber strength, speed of fiber drawing, and the like. One class of structural variations which has become useful relative to 3-methacryloxypropyltrimethoxysilane is the class of methacrylamidoalkylalkoxysilanes. Prior to the present invention, the processes for the production of acrylamidoalkylalkoxysilanes have had at least one major deficiency.

One early disclosure for the preparation of acrylamidoalkylalkoxysilanes is U. S. Patent No. 3,249,461, wherein aminopropyltrimethoxysilane is reacted with methacryloyl or acryloyl chloride in an inert solvent blend. The reaction generates an equimolar amount of hydrogen chloride by-product, which was removed by washing the product/by-product mixture with excess aqueous sodium carbonate. Deficiencies of this process include the use of solvents, which lowers yield based on unit volume of production equipment, the formation of hydrogen chloride by-product necessitating its removal, and the removal of hydrogen chloride by aqueous washing, which will hydrolyze a significant portion of the methoxysilane groups forming higher oligomeric or polymeric siloxanes.

The above process has been modified in U.S. Patent No. 4,711,943 wherein the hydrogen chloride by-product has been handled by formation of tertiary amine hydrochloride salt, which can be removed by filtration or centrifugation. Solvent is still used, and the formation and removal of solid tertiary amine hydrochloride salts further reduces yield per unit volume, adds a difficult and time-consuming step, and generates an undesirable waste which must be disposed of or treated for recycle. U. S. Patent No. 3,249,461 also discloses that the corresponding acid anhydride may be used in place of the acid chloride, and U. S. Patent No. 3,900,679 discloses formation of methacrylamidoalkylalkoxysilanes by reaction of aminoalkylsilanes with methacrylic acid. Reaction of amines with acids, which would also be by-products of the acid anhydride route above, to form amide groups is accompanied by the formation of an equimolar amount of water. As is known in the art, water will hydrolyze two equivalent amounts of the alkoxysilane groups, forming siloxanes, which reduce product purity, and build molecular weight and viscosity, potentially to the point of gelation.

U. S. Patent No. 4,990,641 teaches a hydrosilation route to structurally different methacrylamidoalkyl-bis-alkoxysilanes as well as an acid chloride route to similar structures. The hydrosilation route to methacrylamidoalkylalkoxysilanes may be complicated by cyclizations of the N-allyl(meth)acrylamide starting materials under reaction conditions (Chem. Abstr., 95, 94175r(1976)). Lastly, the reaction of silazacyclobutanes with acid chlorides is disclosed in U. S. 5,446,180 and the reaction of acid chlorides with silazacyclopentanes in U. S. 5,082,958. This approach is practical only for monofunctional alkoxysilanes, which are of less utility than the di- and trialkoxysilane derivatives. It also requires the intermediate preparation of the commercially unavailable silazacycloalkanes. Thus, while utility for methacrylamidoalkylalkoxysilanes has been increasing (see U. S. Patent Nos. 4,243,426, 4,762,759, 5,008,349, and 5,372,841 among others), there is still a need for improved processes to make said methacrylamidoalkylalkoxysilanes.

While the reaction of aminoalkylsilanes with acrylate esters is known as disclosed in U.S. Patent No. 4,209,455, the reaction conditions are such that Michael addition of the amine group to the acrylate double bond is the first reaction which occurs, and the products are devoid of (meth)acrylate functionality.

US-A-4 548 842 discloses fatty ethenoid acylaminoorganosilicon compounds which have been found to enhance the surface properties of glass articles. The fatty ethenoid acylamino-organosilicon compound can be applied as a coating to the glass article's surface either alone or in combination with dispersing agents and organic polymers and/or fatty acids.

Summary of the Invention

Acrylamidoalkylalkoxysilanes are prepared by reactions of aminoalkylalkoxysilanes containing at least one -NH- group and at least one alkoxy group on silicon with acrylate esters. in the presence of an effective amount of an amidation catalyst and an effective amount of an inhibitor system at an elevated reaction temperature. The reactions preferably are run in the absence of added solvents, including tertiary amines or water washes used in prior art processes to remove acid by-products.

Detailed Description of the Invention

It is an objective of this invention to provide a process for the production of acrylamidoalkylalkoxysilanes which provides high yields per unit volume of production equipment, i.e., the majority of the occupied reactor volume is filled with product, and not with solvents, by-products, or water washes. Preferably, greater than 60% of the occupied volume in the reactor will be filled with product prior to and during purification, more preferably greater than 75%, and most preferably greater than 90%, i.e., preferably there is less than 25% by volume of solvent, and most preferably less than 10% by weight solvent. While the process of this invention does not require the use of solvents, solvents may be used to a limited extent if needed to control temperature or viscosity.

The process of this invention does not require the use of tertiary amines or aqueous washes to remove acid by-products. Preferably, the process is run under essentially anhydrous conditions, i.e., there is less than 0.1 wt % water throughout the entire process, and more preferably less than 0.01 wt % water.

It is a further objective of this invention to provide processes yielding acrylamidoalkylalkoxysilanes with high shelf stability toward acrylate polymerization, preferably at least three months, more preferably six months, and most preferably, at least one year, and high process reproducibility, including avoidance of polymerization during the preparation and purification steps. It is another objective of this invention to provide purified acrylamidoalkylalkoxysilanes, having low color, i.e., less than 100 on the platinum/cobalt scale as described in ASTM Method D-1209, so that said silanes do not contribute undesired color to the products in which they are used. It is a further objective of this invention to provide processes for the production of acrylamidoalkylalkoxysilanes, which employ readily available raw materials, intermediates, and production equipment and which allow for easy purification of the silanes to high purities , i.e., greater than 95%, by standard means, as by simple distillation.

The process of the present invention involves the reaction of an aminoalkylalkoxysilane, containing at least one primary or secondary amine group with an acrylate ester in the presence of an effective amount of an amidation catalyst and an effective amount of an inhibitor system at a relatively high reaction temperature. For the purposes of the present invention an acrylate ester includes, but is not limited to, methacrylate esters, or esters which have alkyl substituents on the unsaturated carbons which are alpha and/or beta to the carboxylate.

The process is represented by the reaction shown:

Catalyst/Heat

$$(RO)_x R_{3-x} SiR^1 NHR^2 + CR_2^3 = CR^3 CO_2 R^4 \longrightarrow (RO)_x R_{3-x} SiR^1 NR^2 COCR^3 = CR_2^3 + R^4 OH$$

Inhibitor

where each R is a lower alkyl group of one to ten carbon atoms, $R^1$ is a linear, branched, cyclic, or substituted divalent hydrocarbon radical of one to twelve carbon atoms which may include heteroatoms, $R^2$ is hydrogen, R, or a monovalent aromatic hydrocarbon radical of six to twelve carbon atoms, an aminoalkyl group or a silyl functionality, and x is 1, 2, or 3, $R^3$ is H, R, a monovalent aromatic hydrocarbon radical of six to twelve carbon atoms or any two $R^3$'s are hydrocarbons, they may be connected to form a ring structure in the molecule, and $R^4$ is R or a monovalent aromatic hydrocarbon radical of six to twelve carbon atoms. Each R, $R^1$ and $R^3$ may be the same or different from each other so long as at least one of the three $R^3$'s in the acrylate ester is other than hydrogen.

R preferably is an alkyl group of one to four carbon atoms. More preferably, R is an alkyl group of one or two carbon atoms, i.e., methyl or ethyl. Preferably, $R^1$ has one to six carbon atoms. The aminoalkyl group of $R^2$ may be of the formula $-(CH_2)_n NHR^2$ where n is 2 to 4. The silyl group of $R^2$ may be of the formula $-R^1 SiR_{3-x}(OR)_x$. $R^3$ preferably is hydrogen or an alkyl. Examples of R are ethyl, methyl, isopropyl or t-butyl. Examples of $R^1$ are $-(CH_2)_3-$, $-CH_2-CH(CH_3)-CH_2-$, $-(CH_2)_2 O(CH_2)_2-$, $-(CH_2)_2 C_6 H_4 (CH_2)_2-$, and $-(CH_2)_2 cyclo-C_6 H_{10}-(CH_2)_2-$. Examples of $R^2$ are H, $-CH3$, $-CH_2 CH_3$, $-C_6 H_5$, $-C_2 H_4 NH_2$, $-C_2 H_4 NHCH_2 CH_3$, $-C_2 H_4 NHC_6 H_5$, $-CH_2 C(CH_3)_3$, $-C_3 H_6 Si(OCH_3)_2 CH_3$, and $-CH(CH_3)_2$. Examples of $R^3$ and $R^4$ are $-CH_3$, $- CH_2 CH_3$, $-C_6 H_5$. Most preferably, $R^1$ is a 1,3-propylene group, and $R^2$ is hydrogen.

Preferred starting silanes are selected from the group of aminoalkylalkoxysilanes, including aminopropyltrimethoxysilane, aminopropyltriethoxysilane, aminopropylmethyldimethoxysilane, aminopropylmethyldiethoxysilane, aminobutyltrimethoxysilane, aminobutyltriethoxysilane, aminobutylmethyldimethoxysilane, aminobutylmethyldiethoxysilane, aminoethylaminopropyltrimethoxysilane, aminoethylaminopropyltriethoxysilane, aminoethylaminopropylmethyldimethoxysilane, aminoethylaminopropylmethyldiethoxysilane, N-methylaminopropyltrimethoxysilane, aminopropyldimethylmethoxysilane, bis-(γ-trimethoxysilylpropyl)amine and other aminoalkylalkoxysilanes capable of forming amides on reaction with methacrylate esters. Most preferably, the aminoalkylalkoxysilanes are aminopropyltrimethoxysilane or aminopropyltriethoxysilane.

The methacrylate ester may be selected from the group of methyl methacrylate, ethyl methacrylate, propyl methacrylate, methyl crotonate, ethyl crotonate, $(CH_3)_2C=CHCO_2CH_3$, $CH_3CH=C(CH_3)CO_2CH_3$, and the like, recognizing that the alcohol released on amide formation will undergo exchange with the alkoxy groups on silicon, forming a mixture of products. It is preferable that methyl or ethyl methacrylate be used. It is not necessary that the acrylate ester and the aminoalkylalkoxysilane contain the same alkoxy group. For example, aminopropyltriethoxysilane will react with methyl methacrylate to provide a methacrylamidopropylalkoxysilane containing all possible combinations of ethoxy and methoxy groups on silicon, due to the formation of methanol as the alcohol by-product and its displacement of ethanol from silicon under reaction conditions. It should be noted correspondingly that reactions of aminopropyltrimethoxysilane with methyl methacrylate and of aminopropyltriethoxysilane with ethyl methacrylate will yield the respective single products with only ethoxy or methoxy groups on silicon.

In general, a stoichiometric excess of the acrylate ester is preferred, to maximize conversion of the aminoalkylalkoxysilane to acrylamidoalkylalkoxysilane. The molar ratio of acrylate ester to aminoalkylalkoxysilane may be in the range of 1.01 to 2.0 or higher, with 1.1 to 1.7 being preferred, and 1.25 to 1.45 being most preferred.

The amidation catalyst is a catalyst capable of forming amides from acrylate esters and aminoalkylalkoxysilanes, typically a Lewis acid and preferably a metal-containing Lewis acid selected from compounds of tin, titanium, aluminum, cobalt, zinc, iron, or lead, more preferably a compound of tin selected from the groups of dibutyltin dilaurate, stannous octoate, and dibutyl tin oxide, and most preferably dibutyltin oxide, used at a level of 0.05 to 2.0 wt-% relative to aminoalkylalkoxysilane, more preferably 0.1 to 1.0 wt-%, and most preferably 0.5 wt-%.

The inhibitor package contains at least two, and preferably at least three different inhibitor components, one being a volatile inhibitor, i.e., having a boiling point in the range of 60-150° C, more preferably 80-130° C, and most preferably 90-120° C. The volatile inhibitor is preferably a secondary amine, more preferably a dialkyl amine, and most preferably dipropylamine, which inhibitor is capable of codistilling with the acrylate ester and the alcohol by-product and preventing polymerization of the acrylate ester in upper areas of the reactor.

The second inhibitor component is a standard inhibitor with intermediate volatility which is capable of codistilling with the product or product mixture, i.e., has a boiling point in the range of 150-370°C, more preferably 200-300° C, and most preferably 225-275° C. The second inhibitor component is preferably not an aromatic amine or phenol which contains an aminomethylaryl grouping. While inhibitors containing aminomethylaryl groupings, e.g., 2,6-di-t-butyl-4-(dimethylamino)methylphenol, are known to be effective inhibitors for unsaturated silanes (see U. S. Patent Nos. 5,103,032 and 5,145,979), their use is contraindicated in the present invention due to unexplained formation of undesired color. Accordingly, the second inhibitor preferably is selected from the groups of phenols, thiophenols, hindered cycloaliphatic amines, stable nitroxides, and aromatic amines with nitrogen directly bonded to an aromatic ring, including 2,6-di-t-butyl-4-methylphenol, p-methoxythiophenol, 2-t-butyl-4-methoxyphenol, p-methoxyhydroquinone, 2,2,6,6-tetramethylpiperidine, TEMPO (2,2,6,6-tetramethylpiperidinyloxy free radical) and 4-hydroxyTEMPO, diphenylamine, phenothiazine, and the like. Most preferably, the second inhibitor component in the inhibitor package is IONOL (Shell Chemical Co., Houston, TX) (2,6-di-t-butyl-4-methylphenol).

The optional third inhibitor component is a standard high boiling, nonvolatile inhibitor, not capable of codistilling with the product or product mixture and remains in the pot residue after distillation, allowing easy removal of same from the distillation unit. Selection from a wide variety of heavy inhibitors should suffice; preferred examples include higher molecular weight substituted phenols such as the styrenated phenols or octadecyl 3-(3,5-di-t-butyl-4-hydroxyphenyl)propionate, bisphenols such as 2,2'-methylenebis(6-t-butyl-p-cresol) or 4,4'-methylenebis(2,6-di-t-butylphenol), thiobisphenols such as SANTONOX (Flexsys America, Akron, OH) antioxidant 4,4'-thio-bis(6-t-butyl-m-cresol), 1,1'-thiobis(2-naphthol), or 2,2'-thiobis(4-methyl-6-t-butylphenol), polyphenol compounds such as IRGANOX 1010 (Ciba Specialty Chemicals, Tarrytown, NY), tetrakis[methylene-3-(3,5-di-t-butyl-4-hydroxyphenyl)propionate]methane, or ETHANOX 330 (Ethyl Corp., Virginia), 1,3,5-trimethyl-2,4,6-tris(3,5-di-t-butyl-4-hydroxybenzyl)benzene, and diarylamines such as N,N'-diphenyl-1,4-phenylenediamine. The optional heavy inhibitor preferably also will not contain an aminomethylaryl grouping and the most preferred candidate is SANTONOX antioxidant. The most volatile inhibitor component, for example, a secondary amine inhibitor, may be present in the acrylate ester in the range of 0.5 to 5.0 wt-%, preferably 1.0 to 3.5 wt-%, and most preferably 1.5 to 2.5 wt-%. The second inhibitor component, for example, IONOL, may be present in the product or product mixture in the range of 50 to 5000 parts per million (ppm) by weight, more preferably 50 to 125 ppm, and most preferably 50 to 75 ppm. The optional heavy inhibitor may be present in the product or product mixture in the range of 100 to 2000 ppm, with 200 to 1000 ppm being preferred, and 250 to 600 ppm being most preferred. It should be recognized that each component may include more than one inhibitor, i.e., may be a mixture, and that acrylate esters as commercially supplied will contain at least one inhibitor, which may or may not be considered part of the inhibitor package of the present invention.

While different modes of combination of the reactants, catalyst, and inhibitor package may be used, a preferred approach is to combine the aminoalkylalkoxysilane, the amidation catalyst, and one or more less volatile or heavy inhibitor in the reactor, heat to the reaction temperature, and add the methacrylate ester containing the volatile amine inhibitor to the mixture in the reactor. This allows the achievement and maintenance of a relatively high reaction temperature in the reactor. The reaction temperature should be in the range of 100-200°C, preferably 150-200°C, and most preferably 165-170°C. At the reaction temperature, the acrylate ester, the volatile amine inhibitor, and the by-product alcohol will be refluxing in the reactor head space, allowing removal of most of the by-product alcohol by distillation/codistillation. Removal of the by-product alcohol with the volatile amine inhibitor and some of the acrylate ester is a preferred means of maintaining high reaction temperature.

The reactor may be any of a variety of commercially used reaction vessels, with means of addition of one or more reactants, agitation, heating and cooling, condensing of vapors, maintenance of inert atmosphere, and transfer of the product or product mixture from the reactor. Reactions are run under an inert atmosphere, preferably of nitrogen, which may contain a small percentage of oxygen, preferably 3% relative to nitrogen, to enhance performance of the inhibitor package. While there is no distinct need for operation under pressure, the reactions may be run under pressure to assist in maintaining the high reaction temperature. While there is also no distinct need to run reactions under vacuum, it is preferable to apply high vacuum if the product is to be distilled.

Depending on the application, the product may be used as the devolatilized, filtered crude material, particularly if the optional heavy inhibitor is not used. It is preferable to distill the product to remove catalyst residues and any oligomeric or polymeric species which may have formed, particularly where low color and high shelf stability is desired, and distillations may be performed in the reactor or in a separate distillation unit. Distillation preferably is done under vacuum, in the range of 120-160°C at 0.05 to 5 mm Hg.

Examples

The following examples are intended only to illustrate the process of the present invention.

Example 1 - A 1-liter, 3-necked flask was equipped with a thermometer, magnetic stirring bar, distillation head with water condenser, receiver and cold trap, heating mantle, nitrogen flow valves, and dropping funnel modified with glass tube extension for sub-surface liquid addition. Aminopropyltriethoxysilane *(558.3* g, 2.5 moles) and dibutyltin oxide (2.8 g, 0.011 mole, 0.5 wt-%) were charged and the stirred suspension heated to 165-170°C. Over a period of 2 hr, methyl methacrylate (500.5 g, 5.0 moles) inhibited with 10.1 g (0.1 mole, 2 wt-%) of dipropylamine was added at a uniform rate below the surface. Distillate was constantly removed at a head temperature of 90-110°C. After completion of addition, the mixture was sparged with nitrogen, treated with Celite filter aid and filtered, to remove small amounts of methacrylate polymer, resulting in 655 g of clear, light amber liquid. A 250 g portion was vacuum distilled, providing 220 g of product at 126-135°C/0.07-0.3 mm Hg, calculating to an 84.8% yield based on aminopropyltriethoxysilane. GC Analysis of the distilled product showed three of the possible four mixed alkoxysilanes. This example demonstrated polymer formation during the preparation step, due to lack of intermediate and heavy inhibitors.

Example 2 -Example 1 was repeated in a similarly fitted 12-liter flask, using 5019 g (22.6 moles) of aminopropyltriethoxysilane, 24.4 g (0.09 mole, 0.5 wt-%) of dibutyltin oxide, and 3125 g (31.2 moles) of methyl methacrylate inhibited with 64 g (0.63 mole) of dipropylamine. Addition time was 5 hr. Batch distillation provided 4923 g (80.9% yield) of product mixture at 145°C/1 mm Hg. Distillation was stopped before completion to prevent gel formation in the flask. This example demonstrated polymer formation during distillation due to lack of intermediate and heavy inhibitors.

Example 3 - Example 1 was repeated on a large scale with 1720 parts of methyl methacrylate, 25.5 parts of dipropylamine, 11.3 parts of dibutyltin oxide and 2324 parts of aminopropyltriethoxysilane. In addition, 1 part of 2,6-di-t-butyl-4-(dimethylaminomethyl)phenol was added to each of the methacrylate feed container and the distillation receiver, and 2.5 parts of 2,6-di-t-butyl-4-methylphenol (IONOL) was added to the silane. Addition of methacrylate was completed in 7 hr and 45 min. Vacuum stripping provided 2861 parts of crude product, of which 2461 parts were vacuum distilled at 165°C/1.5-4 mm Hg. Yield was 1828 parts (76%). While the process steps were free of polymer, the product developed an undesirable dark red color on standing.

Example 4 - Example 3 was repeated four times except that IONOL alone was used instead of 2,6-di-t-butyl-4-(dimethylaminomethyl)phenol in one run, and the silane was combined with 0.2 parts of IONOL and 1 part of SANTONOX, with one part of IONOL in the receiver only (no 2,6-di-t-butyl-4-(dimethylarninomethyl)phenol) in three runs. The distilled products were very consistent with total purities (combined 4 possible mixed alkoxysilanes) of 97.0-99.8 %, color of 5-10 on platinum/cobalt scale (ASTM Method D-1209), and good storage stability regarding avoidance of both color and polymer formation. The distilled product was confirmed to be a mixture of methacrylamidopropyltrialkoxysilanes with all possible combinations of methoxy and ethoxy groups via analyses by gas chromatography/mass spectrometry, Fourier transfer infrared spectrometry, and nuclear magnetic resonance spectrometry. In particular, the essential absence of Michael addition by-products was confirmed.

Example 5- Into a 500 ml round-bottomed three-necked flask equipped with magnetic stir bar, short path distillation head, nitrogen inlet, thermometer, heating mantle, temperature contoller, and addition funnel modified to allow subnatant addition was placed SILQUEST A-1170 (bis-($\gamma$-trimethoxysilylpropyl)amine) (Witco Corp.) (140.4 grams, 0.572 moles) and dibutyltin oxide (0.64 grams, 0.0026 moles). The solution was heated to 170°C, and a solution of methylmethacrylate (114.5 grams, 1.14 moles) and di-n-propylamine (2.27 grams, 0.022 moles) was added over a period of 1.5 hours. A distillate was continuously removed at a head temperature of approximately 100°C. After addition was complete, the solution was sparged with nitrogen for 20 minutes at 170°C, and then for 12 hours as the solution was allowed to cool to room temperature. The crude material was analyzed by GC/MS and found to contain 6% of the amidation product bis-(γ-trimethoxysilylpropyl)methacrylamide, 88% A-1170 (bis-(γ-trimethoxysilylpropyl)amine), and the balance unidentified higher molecular weight species.

Example 6- Into a 5 liter, three necked round bottom flask equipped with magnetic stirring bar, thermometer/ thermowatch, short path distillation head, 10 plate Oldershaw column, heating mantle, and 1 liter addition funnel modified with a glass tube extension to allow addition below the surface of the liquid, was charged 3-aminopropyltriethoxysilane (1,780 g, 8.04 mol) and di-n-butyl tin oxide (8.9g, 0.036 mol). The solution was placed under an atmosphere of $N_2$. The solution was heated to 170 °C, and a solution of ethyl methacrylate (917 g, 8.04 mol) and di-n-propylamine (15.6g, 0.154 mol) was charged to the addition funnel and added sub-natantly over a period of 4 hours. Distillate was continuously removed. Once addition of the ethyl methacrylate was completed, the solution was cooled to 145 °C, and the lites were removed under vacuum. The remaining solution was then distilled through the Oldershaw column at a head temperature of 128-139 °C at 0.5 mm Hg to give 1,540 g of N-[3-(triethoxysilyl)propyl]methacrylamide as a clear, colorless liquid.

**Claims**

1.  A method for preparing acrylamidoalkylalkoxysilanes comprising: reacting an aminoalkylalkoxysilane of the formula $(RO)_xR_{3-x}SiR^1NHR^2$ with an acrylate ester of the formula $CR^3_2=CR^3CO_2R^4$ where each R is a lower alkyl group of one to ten carbon atoms, $R^1$ is a linear, branched, cyclic, or substituted divalent hydrocarbon radical of one to twelve carbon atoms which may include heteroatoms, $R^2$ is hydrogen, R, or a monovalent aromatic hydrocarbon radical of six to twelve carbon atoms, an aminoalkyl group or a silyl functionality, and x is 1, 2,or 3, $R^3$ is H, R or a monovalent aromatic hydrocarbon radical of six to twelve carbon atoms wherein any two of three $R^3$'s may form a ring, $R^4$ is R or a monovalent aromatic hydrocarbon radical of six to twelve carbon atoms, each R, $R^1$ and $R^3$ may be the same or different from each other so long as at least one of the three $R^3$'s in the acrylate ester is other than hydrogen, in the presence of an effective amount of an amidation catalyst and an effective amount of an polymerization inhibitor package at an elevated reaction temperature.

2.  The method of claim 1 comprising combining the aminoalkylalkoxysilane, one or more components of said polymerization inhibitor package, and the amidation catalyst in a reaction vessel, heating same to the elevated reaction temperature of 100 to 200°C, and adding the acrylate ester containing the remaining component of the polymerization inhibitor package.

3.  The method of claim 2 wherein the aminoalkylalkoxysilane is selected from the group consisting of primary aminoalkyltrialkoxysilanes and primary aminoalkylmethyldialkoxysilanes, the polymerization inhibitor package is comprised of at least one intermediate or low volatility having boiling points greater than 150°C and a volatile inhibitor having a boiling point of 60-150°C, the amidation catalyst is a Lewis acid, the elevated temperature is greater than 100°C.

4.  The method of claim 3 wherein the Lewis acid amidation catalyst is *an organometallic* compound of tin, titanium, aluminum, cobalt, zinc, iron or lead, the volatile inhibitor having a boiling point of 60-150°C is a secondary amine, the intermediate or low volatility inhibitor is comprised of a hindered phenol having a boiling point in the range of 200-300°C and a non-volatile inhibitor having a boiling point greater than 370°C, and the elevated temperature is in the range of 150-200°C.

5.  The method of claim 3 wherein the aminoalkylalkoxysilane is aminopropyltriethoxysilane, the hindred phenol is 2,6-di-t-butyl-4methylphenol and the non-volatile inhibitor is 4,4-thio-bis (6-t-butyl-m-cresol), the amidation catalyst is dibutyltin oxide, the acrylate ester is methyl methacrylate used at a molar ratio of 1.1 to 1.7 relative to aminoalkylalkoxysilane, the volatile inhibitor is dipropylamine, and the elevated temperature is 165-170°C.

6.  The method of claim 5 wherein the hindered phenol is present in the range of 50 to 2000 parts per million by weight of the reaction mixture, the non-volatile inhibitor is present in the range of 100 to 2000 parts per million by weight of the reaction mixture, and the amidation catalyst is present in the range of 0.1 to 1.0 wt-% relative to the aminoalkylalkoxysilane.

7.  The method of claim 1 further comprising purifying the reaction mixture by distillation and wherein the occupied volume of the reactor after reaction and before and during purification comprises at least 75% by volume of the acrylamidoalkylalkoxysilane product.

8. A composition comprising:

    (a) an aminoalkoxysilane of the formula $(RO)_xR_{3-x}SiR^1NHR^2$;
    (b) an acrylate ester of the formula $CR^3_2=CR^3CO_2R^4$;
    (c) an inhibitor with a boiling point of greater than 150°C;
    (d) an inhibitor with a boiling point of 60°C to 150°C; and
    (e) an amidation catalyst;

where each R is a lower alkyl group of one to ten carbon atoms, $R^1$ is a linear, branched, cyclic, or substituted divalent hydrocarbon radical of one to twelve carbon atoms which may include heteroatoms, $R^2$ is hydrogen, R, or a monovalent aromatic hydrocarbon radical of six to twelve carbon atoms, an aminoalkyl group or a silyl functionality, and x is 1, 2, or 3, $R^3$ is H, R or a monovalent aromatic hydrocarbon radical of six to twelve carbon atoms, $R^4$ is R or a monovalent aromatic hydrocarbon radical of six to twelve carbon atoms, and each R, $R^1$ and $R^3$ may be the same or different from each other so long as at least one of the three $R^3$'s in the acrylate ester is other than hydrogen.

9. A composition according to claim 8 wherein the amidation catalyst is selected from the group consisting of an organometallic compound of tin, titanium, aluminum, cobalt, zinc, iron or lead.

10. A composition according to claim 9 wherein the acrylate ester is methyl methacrylate or ethyl methacrylate.

11. A composition according to claim 10 wherein the silane is selected from the group consisting of aminopropyltrimethoxysilane, aminopropyltriethoxysilane, aminopropylmethyldimethoxysilane, aminopropylmethyldiethoxysilane, aminobutyltrimethoxysilane, aminobutyltriethoxysilane, aminobutylmethyldimethoxysilane, aminobutylmethyldiethoxysilane, aminoethylaminopropyltrimethoxysilane, aminoethylaminopropyltriethoxysilane, aminoethylaminopropylmethyldimethoxysilane, aminoethylaminopropylmethyldiethoxysilane, N-methylaminopropyltrimethoxysilane, and aminopropyldimethylmethoxysilane.

12. A composition according to claim 11 wherein the inhibitor (d) is a dialkyl amine.

13. A composition according to claim 12 additionally comprising a third inhibitor with a boiling point of greater than 300°C.

14. A composition according to claim 13 wherein the catalyst is dibutyltin oxide.

15. A composition according to claim 14 wherein the inhibitor (c) is a hindered phenol.

16. A composition according to claim 15 wherein the ester is present at a molar ratio of 1.1 to 1.7 relative to aminoalkylalkoxysilane.

**Patentansprüche**

1. Verfahren zum Herstellen von Acrylamidoalkylalkoxysilanen mit: Umsetzen eines Aminoalkylalkoxysilans der Formel $(RO)_xR_{3-x}SiR^1NHR^2$ mit einem Acrylatester der Formel $CR^3_2=CR^3CO_2R^4$, bei der jedes R eine Niederalkylgruppe von 1 bis 10 Kohlenstoffatomen, $R^1$ ein lineares, verzweigtes, cyclisches oder substituiertes divalentes Kohlenwasserstoffradikal von 1 bis 12 Kohlenstoffatomen ist, das Heteroatome umfassen kann, $R^2$ für Wasserstoff, R oder ein monovalentes aromatisches Kohlenwasserstoffradikal von 6 bis 12 Kohlenstoffatomen, eine Aminoalkylgruppe oder eine Silylfunktionalität steht, und x für 1, 2 oder 3 steht, $R^3$ für H, R oder ein monovalentes aromatisches Kohlenwasserstoffradikal von 6 bis 12 Kohlenstoffatomen steht, wobei beliebige 2 von 3 $R^3$'s einen Ring bilden können, $R^4$ für R oder ein monovalentes aromatisches Kohlenwasserstoffradikal von 6 bis 12 Kohlenstoffatomen steht, jedes R, $R^1$ und $R^3$ dieselben oder voneinander verschieden sein können, solange mindestens eines der 3 $R^3$'s in dem Acrylatester anders als Wasserstoff ist, in der Anwesenheit einer wirksamen Menge eines Amidierungskatalysators und einer wirksamen Menge eines Polymerisationsinhibitorpaketes bei einer erhöhten Reaktionstemperatur.

**2.** Verfahren nach Anspruch 1 mit Kombinieren des Aminoalkylalkoxysilans, einer oder mehrerer Komponenten des Polymerisationsinhibitorpaketes und des Amidierungskatalysators in einem Reaktionsgefäß, Heizen desselben auf die erhöhte Reaktionstemperatur von 100 bis 200°C und Zugeben des Acrylatesters, das die verbleibende Komponente des Polymerisationsinhibitorpaketes enthält.

**3.** Verfahren nach Anspruch 2, bei dem das Aminoalkylalkoxysilan aus der Gruppe ausgewählt ist, die aus primären Aminoalkyltrialkoxysilanen und primären Aminoalkylmethyldialkoxysilanen besteht, das Polymerisationsinhibitorpaket aus mindestens einem Zwischenstoff geringer Flüchtigkeit, der Siedepunkte größer als 150°C besitzt, und einem flüchtigen Inhibitor besteht, der einen Siedepunkt von 60 bis 150°C besitzt, der Amidierungskatalysator eine Lewis-Säure ist und die erhöhte Temperatur größer als 100°C ist.

**4.** Verfahren nach Anspruch 3, bei dem der Lewis-Säureamidierungskatalysator eine organometallische Verbindung aus Zinn, Titan, Aluminium, Kobalt, Zink, Eisen oder Blei ist, der flüchtige Inhibitor, der einen Siedepunkt von 60 bis 150°C besitzt, ein sekundäres Amin ist, der Zwischenstoff oder der Inhibitor geringer Flüchtigkeit aus einem gehinderten Phenol mit einem Siedepunkt im Bereich von 200 bis 300°C und einem nicht flüchtigen Inhibitor mit einem Siedepunkt größer als 370°C besteht und die erhöhte Temperatur im Bereich von 150 bis 200°C liegt.

**5.** Verfahren nach Anspruch 3, bei dem das Aminoalkylalkoxysilan Aminopropyltriethoxysilan ist, das gehinderte Phenol 2,6-Di-t-butyl-4-methylphenol ist und der nicht flüchtige Inhibitor 4,4-Thio-bis(6-t-butyl-m-cresol) ist, der Amidierungskatalysator Dibutylzinnoxid ist, das Acrylatester Methylmethacrylat ist, das bei einem Molverhältnis von 1,1 bis 1,7 relativ zum Aminoalkylalkoxysilan verwendet wird, der flüchtige Inhibitor Dipropylamin ist und die erhöhte Temperatur 165 bis 170°C beträgt.

**6.** Verfahren nach Anspruch 5, bei dem das gehinderte Phenol in dem Bereich von 50 bis 2000 Gewichtsteile pro Million der Reaktionsmischung vorhanden ist, der nicht flüchtige Inhibitor in dem Bereich von 100 bis 2000 Gewichtsteile pro Million der Reaktionsmischung vorhanden ist und der Amidierungskatalysator in dem Bereich von 0,1 bis 1,0 Gew.-% relativ zu dem Aminoalkylalkoxysilan vorhanden ist.

**7.** Verfahren nach Anspruch 1, das weiter Reinigen der Reaktionsmischung durch Destillation umfasst und bei dem das belegte Volumen des Reaktors nach der Reaktion und vor und während der Reinigung mindestens 75 Vol.-% des Acrylamidoalkylalkoxysilanproduktes umfasst.

**8.** Zusammensetzung mit:

(a) einem Aminoalkoxysilan der Formel $(RO)_xR_{3-x}SiR^1NHR^2$,
(b) einem Acrylatester der Formel $CR^3_2=CR^3CO_2R^4$,
(c) einem Inhibitor mit einem Siedepunkt größer als 150°C,
(d) einem Inhibitor mit einem Siedepunkt von 60°C bis 150°C und
(e) einem Amidierungskatalysator,

wobei jedes R für eine Niederalkylgruppe von 1 bis 10 Kohlenstoffatomen steht, $R^1$ für ein lineares, verzweigtes, cyclisches oder substituiertes divalentes Kohlenwasserstoffradikal von 1 bis 12 Kohlenstoffatomen steht, das Heteroatome enthalten kann, $R^2$ für Wasserstoff, R oder ein monovalentes aromatisches Kohlenwassertstoffradikal von 6 bis 12 Kohlenstoffatomen, eine Aminoalkylgruppe oder eine Silylfunktionalität steht, und x für 1, 2 oder 3 steht, $R^3$ für H, R oder ein monovalentes aromatisches Kohlenwasserstoffradikal von 6 bis 12 Kohlenstoffatomen steht, $R^4$ für R oder ein monovalentes aromatisches Kohlenwasserstoffradikal von 6 bis 12 Kohlenstoffatomen steht, und jedes R, $R^1$ und $R^3$ dieselben oder voneinander verschieden sein können, solange mindestens eines der 3 $R^3$'s in dem Acrylatester anders als Wasserstoff ist.

**9.** Zusammensetzung nach Anspruch 8, bei der der Amidierungskatalysator aus der Gruppe ausgewählt ist, die aus einer organometallischen Verbindung aus Zinn, Titan, Aluminium, Kobalt, Zink, Eisen oder Blei besteht.

**10.** Zusammensetzung nach Anspruch 9, bei der das Acrylatester Methylmethacrylat oder Ethylmethacrylat ist.

**11.** Zusammensetzung nach Anspruch 10, bei der das Silan aus der Gruppe ausgewählt ist, die besteht aus Aminopropyltrimethoxysilan, Aminoproyltriethoxysilan, Aminopropylmethyldimethoxysilan, Aminopropylmethyldiethoxysilan, Aminobutyltrimethoxysilan, Aminobutyltriethoxysilan, Aminobutylmethyldimethoxysilan, Aminobutylmethyldiethoxysilan, Aminoethylaminopropyltrimethoxysilan, Aminoethylaminopropyltriethoxysilan, Aminoethylaminopropylmethyldimethoxysilan, Aminoethylaminopropylmethyldiethoxysilan, N-Methylaminopropyltrimethoxysilan und Aminopropyldimethylmethoxysilan.

**12.** Zusammensetzung nach Anspruch 11, bei der der Inhibitor (d) ein Dialkylamin ist.

**13.** Zusammensetzung nach Anspruch 12, die zusätzlich einen dritten Inhibitor mit einem Siedepunkt größer als 300°C umfasst

**14.** Zusammensetzung nach Anspruch 13, bei der der Katalysator Dibutylzinnoxid ist.

**15.** Zusammensetzung nach Anspruch 14, bei der der Inhibitor (c) ein gehindertes Phenol ist

**16.** Zusammensetzung nach Anspruch 15, bei der das Ester in einem Molverhältnis von 1,1 bis 1,7 relativ zu Aminoalkylalkoxysilan vorhanden ist.

## Revendications

**1.** Procédé pour la préparation d'acrylamidoalkyl-alcoxysilanes comprenant :

la réaction d'un aminoalkylalcoxysilane de formule $(RO)_xR_{3-x}SiR^1NHR^2$ avec un ester d'acrylate de formule $CR^3_2{=}CR^3CO_2R^4$ dans lesquelles chaque R est un groupe alkyle inférieur ayant de 1 à 10 atomes de carbone, $R^1$ est un radical hydrocarboné divalent linéaire, ramifié, cyclique ou substitué ayant de 1 à 12 atomes de carbone pouvant comprendre des hétéroatomes, $R^2$ est l'hydrogène, R, ou un radical hydrocarboné aromatique monovalent ayant de 6 à 12 atomes de carbone, un groupe aminoalkyle ou une fonctionnalité silyle, et x vaut 1, 2 ou 3, $R^3$ est H, R ou un radical hydrocarboné aromatique monovalent ayant de 6 à 12 atomes de carbone dans lequel deux des trois $R^3$ peuvent former un cycle, $R^4$ est R ou un radical hydrocarboné aromatique monovalent ayant de 6 à 12 atomes de carbone, chacun parmi R, $R^1$ et $R^3$ peut être identique ou différent des autres du moment que au moins l'un des trois $R^3$ dans l'ester d'acrylate est différent de l'hydrogène, en présence d'une quantité efficace d'un catalyseur d'amidation et d'une quantité efficace d'un ensemble d'inhibiteurs de polymérisation à une température de réaction élevée.

**2.** Procédé selon la revendication 1, comprenant la combinaison de l'aminoalkylalcoxysilane, d'un ou plusieurs composants dudit ensemble d'inhibiteurs de polymérisation et du catalyseur d'amidation dans une cuve de réaction, le chauffage de celle-ci à une température de réaction élevée allant de 100 à 200°C, et l'ajout de l'ester d'acrylate contenant le composant restant de l'ensemble d'inhibiteurs de polymérisation.

**3.** Procédé selon la revendication 2, dans lequel l'aminoalkylalcoxysilane est choisi dans le groupe comprenant des aminoalkyltrialcoxysilanes primaires et des aminoalkylméthyldialcoxysilanes primaires, l'ensemble d'inhibiteurs de polymérisation se compose d'au moins un inhibiteur intermédiaire ou faiblement volatil ayant des points d'ébullition supérieurs à 150°C et un inhibiteur volatil ayant un point d'ébullition de 60 à 150°C, le catalyseur d'amidation est un acide de Lewis et la température élevée est supérieure à 100°C.

**4.** Procédé selon la revendication 3, dans lequel le catalyseur d'amidation à base d'acide de Lewis est un composé organométallique d'étain, de titane, d'aluminium, de cobalt, de zinc, de fer ou de plomb, l'inhibiteur volatil ayant un point d'ébullition de 60 à 150°C est une amine secondaire, l'inhibiteur intermédiaire ou faiblement volatil se compose d'un phénol encombré ayant un point d'ébullition dans la plage de 200 à 300°C et d'un inhibiteur non volatil ayant un point d'ébullition supérieur à 370°C et la température élevée se situe dans la plage de 150 à 200°C.

**5.** Procédé selon la revendication 3, dans lequel l'aminoalkylalcoxysilane est un aminopropyltriéthoxy-silane, le phénol encombré est le 2,6-di-t-butyl-4-méthylphénol et l'inhibiteur non volatil est le 4,4-thio-bis(6-t-butyl-m-crésol), le catalyseur d'amidation est l'oxyde de dibutylétain, l'ester d'acrylate est le méthacrylate de méthyle utilisé dans un rapport molaire de 1,1 à 1,7 par rapport à l'aminoalkylalcoxysilane, l'inhibiteur volatil est la dipropylamine et la température élevée va de 165 à 170°C.

**6.** Procédé selon la revendication 5, dans lequel le phénol encombré est présent dans une plage de 50 à 2000 parties par million en poids du mélange réactionnel, l'inhibiteur non volatil est présent dans la plage allant de 100 à 2000 parties par million en poids du mélange réactionnel et le catalyseur d'amidation est présent dans la plage allant de 0,1 à 1,0 % en poids par rapport à l'aminoalkylalcoxysilane.

7.  Procédé selon la revendication 1, comprenant en outre la purification du mélange réactionnel par distillation et dans lequel le volume occupé du réacteur après la réaction et avant ainsi que pendant la purification comprend au moins 75 % en volume de l'acrylamidoalkylalcoxysilane.

8.  Composition comprenant :

    (a) un aminoalcoxysilane de formule $(RO)_xR_{3-x}SiR^1NHR^2$ ;
    (b) un ester d'acrylate de formule $CR^3_2=CR^3CO_2R^4$ ;
    (c) un inhibiteur ayant un point d'ébullition supérieur à 150°C ;
    (d) un inhibiteur ayant un point d'ébullition allant de 60° à 150°C ; et
    (e) un catalyseur d'amidation ;

    dans laquelle chaque R est un groupe alkyle inférieur ayant de 1 à 10 atomes de carbone, $R^1$ est un radical hydrocarboné divalent linéaire, ramifié, cyclique ou substitué ayant de 1 à 12 atomes de carbone pouvant comprendre des hétéroatomes, $R^2$ est l'hydrogène, R, ou un radical hydrocarboné aromatique monovalent ayant de 6 à 12 atomes de carbone, un groupe aminoalkyle ou une fonctionnalité silyle, et x vaut 1, 2 ou 3, $R^3$ est H, R ou un radical hydrocarboné aromatique monovalent ayant de 6 à 12 atomes de carbone, $R^4$ est R ou un radical hydrocarboné aromatique monovalent ayant de 6 à 12 atomes de carbone, chacun parmi R, $R^1$ et $R^3$ peut être identique ou différent des autres du moment que au moins l'un des trois $R^3$ dans l'ester d'acrylate est différent de l'hydrogène.

9.  Composition selon la revendication 8, dans laquelle le catalyseur d'amidation est choisi dans le groupe comprenant un composé organométallique d'étain, de titane, d'aluminium, de cobalt, de zinc, de fer ou de plomb.

10. Composition selon la revendication 9, dans laquelle l'ester d'acrylate est le méthacrylate de méthyle ou le méthacrylate d'éthyle.

11. Composition selon la revendication 10, dans laquelle le silane est choisi dans le groupe comprenant un aminopropyltriméthoxysilane, un aminopropyl-triéthoxysilane, un aminopropylméthyldiméthoxysilane, un aminopropylméthyldiéthoxysilane, un aminobutyltriméthoxy-silane, un aminobutyltriéthoxysilane, un aminobutylméthyldiméthoxysilane, un aminobutyl-méthyldiéthoxysilane, un aminoéthylaminopropyl-triméthoxysilane, un aminoéthylaminopropyl-triéthoxysilane, un aminoéthylaminopropylméthyl-diméthoxysilane, un aminoéthylaminopropylméthyl- diéthoxysilane, un N-méthylaminopropyltriméthoxysilane et un aminopropyldiméthylméthoxysilane.

12. Composition selon la revendication 11, dans laquelle l'inhibiteur (d) est une dialkylamine.

13. Composition selon la revendication 12, comprenant de plus un troisième inhibiteur ayant un point d'ébullition supérieur à 300°C.

14. Composition selon la revendication 13, dans laquelle le catalyseur est l'oxyde de dibutylétain.

15. Composition selon la revendication 14, dans laquelle l'inhibiteur (c) est un phénol encombré.

16. Composition selon la revendication 15, dans laquelle l'ester est présent selon un rapport molaire de 1,1 à 1,7 par rapport à l'aminoalkylalcoxysilane.